# EUROPEAN PATENT APPLICATION

(11) **EP 2 723 055 A1**
(43) Date of publication of application: **23.04.2014**
(21) Application number: 13186770.7
(22) Date of filing: 27.02.2004
(51) Int. Cl.: H04N 1/00

(54) **Image communication method and apparatus**

(30) Priority: 12.03.2003 JP 2003066857; 24.12.2003 JP 2003427703
(62) Divisional of application: 04715517.1
(71) Applicant: CANON KABUSHIKI KAISHA, Ohta-ku Tokyo 146-8501 (JP)
(72) Inventor: Tonegawa, Nobuyuki, Ohta-ku, Tokyo (JP)
(74) Representative: Foxon, Rachel Siobhan

(57) **Abstract**

This disclosure relates to specifying a sender in detail when image data is attached to email and transmitted from an Internet facsimile device. An MFP (100) has an E-mail transmission mode in which email with an image is transmitted to a general email address, and an IFAX transmission mode in which email with an image is transmitted to an apparatus copying with the IFAX function. In transmitting an image, the MFP (100) authenticates the user in cooperation with an authentication server (102). When the authenticated user selects the IFAX transmission mode, an email address corresponding to the user is acquired from the authentication server (102), and set in the Sender field. The From field holds the email address of a device, similar to the prior art.

## Description

### TECHNICAL FIELD

This invention relates to an image data communication technique and, more particularly, to an image communication technique of attaching image data to email and exchanging the image data.

### BACKGROUND ART

Recently, as computers become more popular and the information network system is more advanced, email for transmitting/receiving character information via a network has grown to an indispensable information communication tool.

Email allows attaching a mail body formed by character information and also files in various formats. For example, an Internet FAX (to be simply referred to as an IFAX hereinafter) which is beginning to prevail exchanges image data by attaching an image file in the TIFF (Tag Image File Format) format to email. Processing assuming that image data is attached to email and transmitted between a plurality of IFAX devices will be called an IFAX transmission mode.

The IFAX is a technique assuming that image data read by a scanner in a transmission device is converted into TIFF image data, the converted data is transmitted, and the image data received by a reception device is reconstructed and printed in accordance with the TIFF format. In this case, image data can also be received by a general-purpose email application installed in a PC (Personal Computer) in order to utilize a general email protocol. TIFF is a standard developed by the IETF (Internet Engineering Task Force), and is formally called RFC (Request For Comments) 2301.

A TIFF image has a data structure which is relatively easily processed by a device. However, some general-purpose applications on PCs do not support this standard. When color TIFF image data is transmitted from an IFAX device to an email address assigned to a general PC, the general-purpose application on the PC does not support TIFF image data and cannot display the received color image data.

To solve this, an IFAX device adopts an E-mail transmission mode in which data is transmitted to a general email address serving as a destination, in addition to the above-mentioned IFAX mode. In the E-mail transmission mode of the related art, image data is converted into an image format compatible with a PC application, and the converted image data is transmitted.

### DISCLOSURE OF INVENTION

An email address dedicated to a device is always used to transmit email having image data from a transmission device equipped with a conventional IFAX function. For this reason, a sender (user who has transmitted email by using the device) cannot be specified.

Email transmitted in the E-mail transmission mode is basically received by an email application on a PC. In general, the email application can display in detail pieces of information such as the mail sender, subject, and time in addition to an attached file. When email with an image is transmitted to a general email address from an IFAX device, the email address dedicated to the device is displayed as a "From" person in the email application on the receiving side. Thus, the device used for transmission can be specified, but the sender himself cannot be specified.

In this manner, when email with an image is transmitted from an IFAX device, the transmission device can be specified because the email address dedicated to the device is set in the mail address of the sender (From address contained in the header portion). However, the sender himself cannot be specified. This related art is not preferable in terms of the security. This problem becomes serious in an environment in which many persons use one IFAX device.

It is therefore an object of the present invention to provide a technique capable of specifying an original sender who should be responsible for transmission in an image communication apparatus which transmits image data by using an email protocol.

There has conventionally been known only the following technique. A mail address assigned to a PC on the desk of the sender is set as a source mail address in general email, and email is transmitted. When transmission of this email fails, delivery error mail is transmitted to the source mail address (Japanese Patent Laid-Open No. 8-242326). Note that RFC 821 developed by the IETF (Internet Engineering Task Force) makes it mandatory to transmit an error to an email address designated by a MAIL command. RFC 2821 as a revised version of RFC 821 obligates a mail server having the mail box of a recipient to set an email address designated by a MAIL command in the Return-path header of email. Also, RFC 2821 makes it mandatory to transmit an error to an email address described in the Return-path header upon occurrence of the error in mail delivery in processing other than SMTP.

When IFAX error mail is received, it is desirable to easily grasp, by any means, which outgoing mail results in an error.

Accordingly, it is an object of the present invention to notify an image communication apparatus of an error when the error occurs in mail delivery in the image communication apparatus which transmits image data by using a mail delivery protocol.

Other objects in addition to the above-described object will be apparent from the whole specification.

The first aspect according to the present application is characterized by the following arrangement. For example, when image data is attached to email and the email is transmitted to an apparatus of the same type as the image communication apparatus, the image communication apparatus according to the present invention sets, in source information (From field, Sender field, or the like), the first email address capable of specifying a user who transmits email and the second email address associated with the image communication apparatus, and then transmits the email.

In accordance with the present invention as described above, the image communication apparatus which transmits image data by using an email protocol transmits image data together with information on an original sender who should be responsible for transmission. This enables specifying a person who should be responsible for transmission.

Other features and advantages of the present invention will be apparent from the following description taken in conjunction with the accompanying drawings, in which like reference characters designate the same or similar parts throughout the figures thereof.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a view showing an example of a network connection environment according to an embodiment of the present invention;
Fig. 2 is a block diagram showing an example of the arrangement of an MFP 100;
Fig. 3 is a view showing an example of the hierarchical structure of a network program in the MFP 100;
Fig. 4 is a view showing an example of the editing window of a program which refers to and edits user information and its contents registered in an authentication server 102;
Fig. 5 is a flow chart showing an example of authentication processing when the user uses the MFP 100 or 101;
Fig. 6 is a view showing an example of authentication processing (S503) to the authentication server 102 in more detail;
Fig. 7 is a view showing an example of a transmission setting window displayed in transmitting image data by email;
Fig. 8 is a view showing an example of an address book for managing destination information;
Fig. 9 is a flow chart showing an example of processing of attaching image data to email and transmitting the image data;
Fig. 10 is a view for explaining an example of image header addition processing (S904) executed in transmission in the IFAX mode;
Fig. 11 is a flow chart showing an example of processing when image data is attached to email and transmitted according to the second embodiment;
Fig. 12 is a view showing an example of email data according to the embodiment;
Fig. 13 is a view showing an example of an SMTP transmission sequence according to the embodiment;
Fig. 14 is a view showing an example of an SMTP reception sequence according to the embodiment; and
Fig. 15 is a view showing an example of mail data (1414 to 1416 in Fig. 14) according to the embodiment.

### BEST MODE FOR CARRYING OUT THE INVENTION

Preferred embodiments of the present invention will now be described in detail in accordance with the accompanying drawings.

Embodiments of the present invention will be described. The following embodiments are merely species of the present invention disclosed as a genus. In other words, the following embodiments are merely some of embodiments falling within the technical scope of the invention of the present application defined by the appended claims. Hence, even embodiments which are not directly described in the specification or drawings of the present application will fall within the technical scope of the invention of the present application as far as the technical concept is the same as the present invention which is a genus disclosed in the specification or drawings of the present application and an invention described in the appended claims.

Not all species inventions described in the following embodiments are described in the appended claims. Such invention is not excluded on purpose from the technical scope of the patent invention, but is equivalent to the patent invention and thus may not be described in the appended claims.

### [First Embodiment]

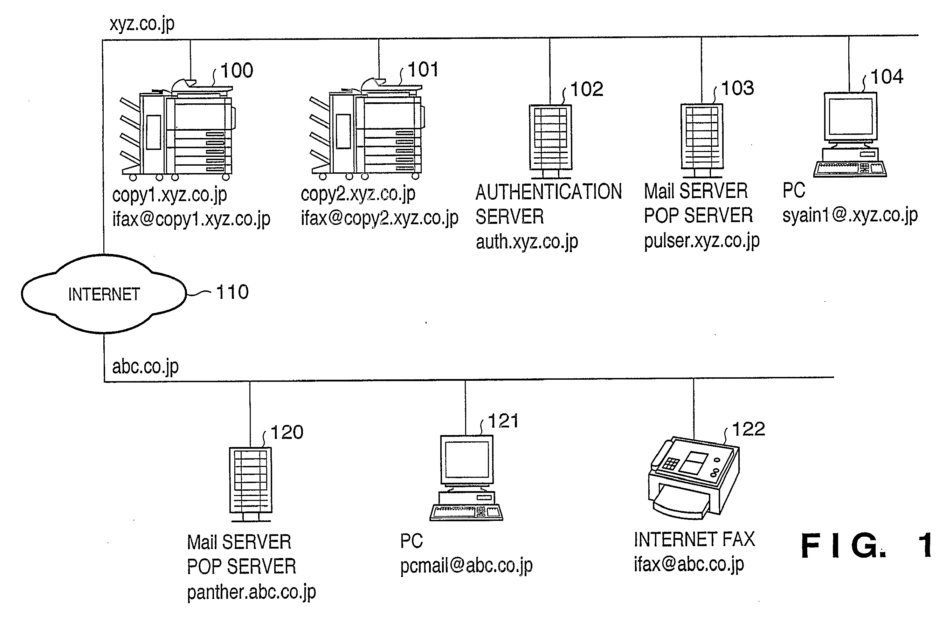

Fig. 1 is a view showing a network connection environment according to the first embodiment of the present invention. MFPs (Multi Function Peripherals) 100 and 101 are multifunction copying machines which incorporate scanners and printers. The multifunction copying machines have a copying function, a FAX transmission/reception function, and a printer function of printing data created in a computer.

The MFPs 100 and 101 are connected to a network whose domain name is xyz.co.jp, and connected to a plurality of computers such as an authentication server 102, first Mail/POP server 103, and PC 104, and other network devices.

This network is further connected to worldwide Internet 110, and also connected to a network whose domain name is abc.co.jp. The network "abc.co.jp" is connected to a second Mail/POP server 120, PC 121, Internet FAX 122, and the like.

The MFP 100 is assigned a HOST name "copy1.xyz.co.jp" and a device email address "ifax@copy1.xyz.co.jp". The MFP 101 is assigned a HOST name "copy2.xyz.co.jp" and a device email address "ifax@copy2.xyz.co.jp".

The authentication server 102 performs user authentication within the domain. The authentication server 102 stores user names and passwords which are valid within the domain. For example, when the client PC 104 is powered on, the client PC 104 requests the user to input a user name and password. When the user name and password are input, the client PC 104 inquires of the authentication server 102 whether the user name and password are authentic. In response to this inquiry, the authentication server 102 determines whether the input user name and password have been registered in the user database. If so, the authentication server 102 notifies the PC 104 of the completion of authentication. After reception of the authentication completion notification is confirmed, the PC 104 can be used. Authentication processing is also executed in the use of MFP.

The PC 104 incorporates general-purpose email software. Assume that the PC 104 is given a mail address "syain1@xyz.co.jp".

The mail/POP servers 103 and 120 have both a Mail server function and POP server function.

When email is transmitted from the PC 104 to pcmail@abc.co.jp, email data created in the PC 104 is transmitted to the mail server 103 by using the SMTP (Simple mail Transfer Protocol) protocol. The mail server 103 transmits the email data to the mail server 120 in accordance with destination information.

The PC 121 also incorporates general-purpose email software. The general-purpose email software activated in the PC 121 checks whether mail has arrived, by using the POP3 (Post Office Protocol-version 3) protocol. If so, the general-purpose email software receives mail data.

This route is reversed in transmitting mail from pcmail@abc.co.jp of the PC 121 to syain1@xyz.co.jp of the PC 104. That is, data created in the PC 121 is transmitted to the mail server 103 via the mail server 120. The PC 104 receives the incoming email data by using the POP3 protocol.

The MFPs 100 and 101 can transmit an image received by the IFAX reception function, or a monochrome or color image read by the scanner to another communication device. A plurality of modes are prepared for image data transmission. For example, there are provided the E-mail transmission mode which assumes transmission using a general email address as a destination, and the IFAX transmission mode which assumes transmission to an apparatus complying with the IFAX standard. Either mode uses SMTP and POP3 for transmission/reception, and the same operation as the above-described transmission/reception is performed.

In the E-mail transmission mode, image data of the JPEG (Joint Photographic Experts Group) file format or PDF (Portable Document Format) is created, attached to email, and transmitted. For example, when email with a color image is transmitted to a client PC having syain1@xyz.co.jp, the general-purpose email software of the PC 104 can receive the email and display the JPEG image in a general-purpose image viewer. Note that the present invention is not limited to JPEG and PDF, and may use another format.

In the IFAX transmission mode, TIFF image data complying with RFC 2301 is created, attached to email, and transmitted. This image can be received and output by the MFPs 100 and 101 and the Internet FAX 122 which comply with the IFAX standard. In the IFAX transmission mode, devices of the same type communicate with each other via an email protocol. As for read processing in the transmission device and output processing in the reception device, the same processes as conventional facsimile processes (in a known G3 or G4 mode) can be performed.

In this fashion, devices which can process a color image exchange TIFF image data, but in many cases, a general-purpose image viewer does not support TIFF image data. If such image is erroneously transmitted to the PC 104 having syain1@xyz.co.jp, the general-purpose image viewer which does not support TIFF image data cannot display the image.

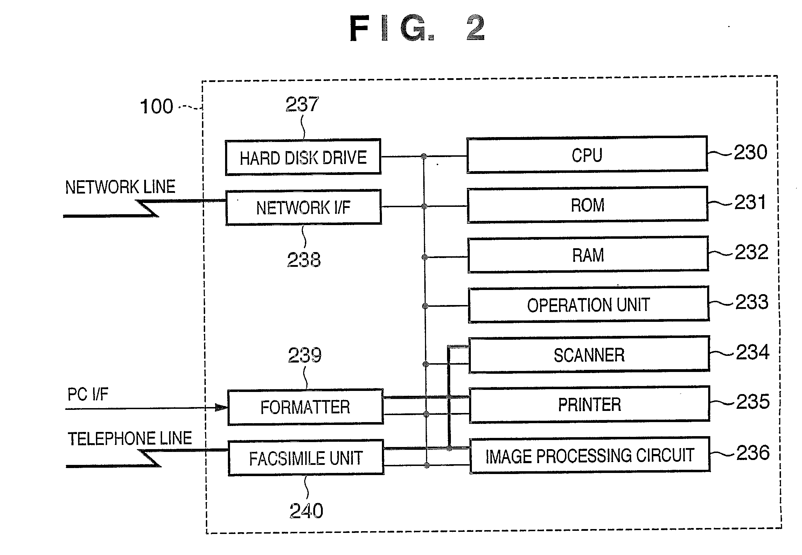

Fig. 2 is a block diagram showing an example of the arrangement of the MFP 100. A CPU 230 is a control circuit which controls the overall system by using a program stored in a ROM 231 and the memory of a RAM 232.

An operation unit 233 includes hard keys such as an LCD display panel, start key, and ten-key pad. The operation unit 233 may include, e.g., a circuit which displays a software button on the LCD, detects that the user has touched the button with his finger, and smoothly executes user operation.

A scanner 234 photoelectrically converts original image data into electrical data. When an original is conveyed from an original feeder (not shown) onto a platen glass, the lamp is turned on, the scanner unit starts moving, and the original is exposed and scanned. Light reflected by the original is guided to a CCD image sensor via a mirror and lens, and converted into an electrical signal. The electrical signal is converted into digital data by an A/D conversion circuit. After the end of original read operation, the original on the platen glass is discharged.

A printer 235 prints electrical image data on a printing sheet. A laser beam-emitting unit emits a laser beam corresponding to electrical image data. The laser beam irradiates a photosensitive drum, forming a latent image corresponding to the laser beam on the photosensitive drum.

A developer mix is attracted from a developing unit to the latent image portion on the photosensitive drum. At a timing synchronized with the start of laser beam irradiation, a printing sheet is fed from a feed cassette and conveyed to a transfer portion. The developer mix attracted to the photosensitive drum is transferred to the printing sheet. The printing sheet on which the developer mix has been transferred is conveyed to a fixing portion, and the developer mix is fixed onto the printing sheet by the heat and pressure of the fixing portion. The printing sheet having passed through the fixing portion is discharged by a discharge roller. The sorter stores discharged printing sheets in respective bins to sort the printing sheets.

An image processing circuit 236 is formed by a large-capacity image memory, an image rotation circuit, a resolution scaling circuit, and a coding/decoding circuit for MH (Modified Huffman), MR (Modified READ), MMR (Modified Modified READ), JBIT (Joint Bi-level Image experTs Group), JPEG, or the like. The image processing circuit 236 also executes various image processes such as shading, trimming, and masking.

A hard disk drive 237 is a large-capacity recording device connected via an I/F such as SCSI or USB. Another recording device such as an MO may replace the hard disk drive 237.

A network I/F 238 is a circuit which executes network data link processing. For example, the network I/F 238 executes processing for connecting a network line such as an Ethernet® represented by 10BASE-T or 100BASE-T or a token ring.

A formatter 239 is a rendering circuit which comprises a PC I/F circuit such as an IEEE 1284 parallel interface or USB and creates image data on the basis of PDL (Page Description Language) data received from a personal computer via the PC I/F circuit or the network I/F 238. Image data is processed by the image processing circuit 236, and printed out from the printer 235.

A facsimile unit 240 is a facsimile I/F circuit formed by circuits such as an NCU (Network Control Unit) and MODEM (MOdulator/DEModulator) for connecting a telephone line. For example, image data read by the scanner 234 is processed by the image processing circuit 236, and transmitted to another FAX device via a telephone line. Alternatively, data transmitted from another FAX device is received, processed by the image processing circuit 236, and printed by the printer 235.

The scanner 234, printer 235, image processing circuit 236, formatter 239, and facsimile unit 240 are connected via a high-speed video bus other than a CPU bus extending from the CPU 230 so as to be able to transfer image data at high speed.

The above-mentioned copying function is realized whereby the image processing circuit 236 processing image data read via the scanner 234 and the printer 235 printing the image data.

The MFP 100 has a Send function of processing by the image processing circuit 236 image data read by the scanner 234 and transmitting the processed data from a network I/F to a network, and an IFAX function of creating RFC 2301 image data by the image processing circuit 236 and exchanging data by an email protocol.

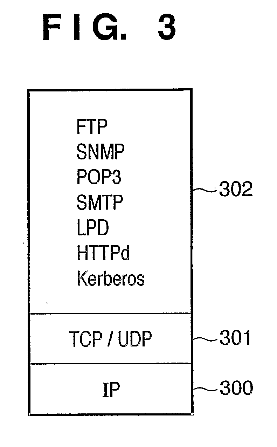

Fig. 3 is a view showing the hierarchical structure of a network program in the MFP 100. As is apparent from Fig. 3, this network program is formed by three layers: an IP (Internet Protocol) 300, TCP (Transmission Control Protocol)/UDP (User Datagram Protocol) 301, and application layer program 302.

The IP 300 is an Internet protocol layer. More specifically, the IP 300 provides a service of transferring a message from a transmission host to a destination host in cooperation with a relay node such as a router. The IP 300 performs routing processing of managing a source address from which data is transmitted and a destination address at which data is received, selecting a network path extending from the transmission host to the destination host in accordance with address information, and transferring data.

The TCP/UDP 301 corresponds to a transport layer. More specifically, the TCP/UDP 301 provides a service of transmitting a message from a transmission application process to a reception application process. TCP is a protocol which provides a connection service, and guarantees high communication reliability. UDP is a protocol which provides a connectionless service, and does not guarantee reliability.

The application layer protocol 302 defines a plurality of protocols. For example, this protocol includes a file transfer service "FTP (File Transfer Protocol)", a network management protocol "SNMP", a printer printing server protocol "LPD", a WWW (World Wide Web) server protocol "HTTPd", an email transmission/reception protocol "SMTP (Simple Mail Transfer Protocol)", and a mail download protocol "POP3 (Post Office Protocol-version 3).

The application layer protocol 302 also includes a Kerberos authentication program defined by RFC 1510.

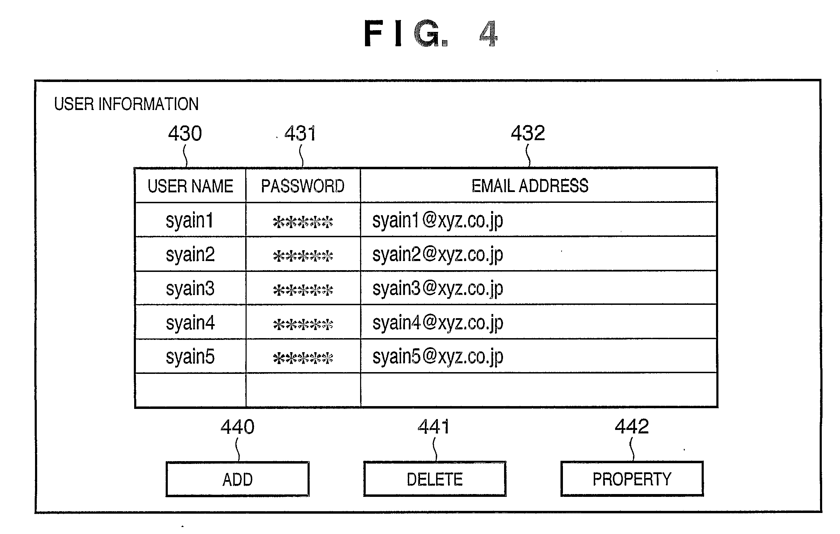

Fig. 4 shows the editing window of a program which refers to and edits user information and its contents registered in the authentication server 102. The authentication server 102 comprises a user database which manages user information. The user information includes, e.g., a user name 430, password 431, and email address.

The user name 430 stores the user name of a user who can operate a computer connected within an "xyz.co.jp" domain principal managed by the authentication server 102. In the example shown in Fig. 3, users "syain1" to "syain5" are registered. A password corresponding to each user name is registered in the password 431. The password is masked by "*****" and displayed so as not to be readily seen. Email addresses usable by registered users are registered in an email address 432. The email address of the first user "syain1" is syain1@xyz.co.jp. Also for syain2 to syain5, email addresses are similarly registered in correspondence with the user names.

An Add key 440 in the editing window is used to newly register a user, and a Delete key 441 is used to delete a registered user. When a Property key 442 is clicked, registered contents are displayed, and the displayed/registered contents can be modified.

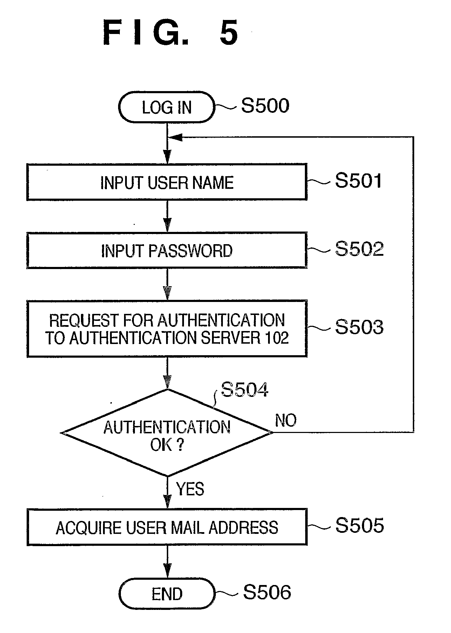

Fig. 5 is a flow chart showing authentication processing when the user uses the MFP 100 or 101. The MFP 100 or 101 can be used by only an authentic user who is successful in authentication processing.

In step S500, when the main power supply of the MFP 100 or 101 is turned on, the CPU 230 executes initialization operation such as initialization of a memory and I/O port. At this time, when "user authentication" is set to "yes" in system user settings, the CPU 230 displays a log-in window on the LCD of the operation unit 233. The log-in window has a column for inputting a user name. The CPU 230 inhibits processing such as copying which requires the intervention of user operation until user authentication is completed.

In step S501, when a user name is input from the operation unit 233, the CPU 230 displays a password input window on the operation unit 233, and waits for an input.

In step S502, the CPU 230 starts authentication processing upon reception of a password from the operation unit 233.

In step S503, the CPU 230 transmits an authentication request together with the input user name and password to the authentication server 102. Upon reception of the authentication request, the authentication server 102 determines whether the user name and password to be authenticated coincide with those registered in the user database, and then sends back the authentication result.

In step S504, the CPU 230 determines whether the authentication result received from the authentication server 102 is "authentication OK". If the user authentication result exhibits "authentication OK", the flow advances to step S505; if "authentication NG", returns to step S501.

In step S505, the CPU 230 acquires user information such as the email address of the logged-in user from the authentication server 102. The user information may be contained in the authentication result, or the CPU 230 may request the authentication server 102 to transmit user information after "authentication OK" is confirmed.

In step S506, the CPU 230 stores the acquired user information in the ROM 231, and ends log-in processing. After user authentication normally ends, processing such as copying or SEND which requires the intervention of user operation can be executed.

The user authentication method using a user name and password has been described. However, the present invention is not limited to the authentication method. For example, a biometrical authentication method using a fingerprint, eyeball, or the like may be adopted. Also, a user authentication method utilizing a non-contact or contact type control card may be employed.

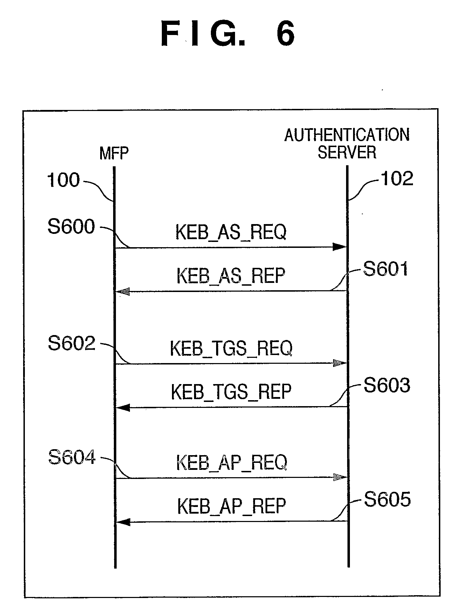

Fig. 6 is a view showing authentication processing (S503) to the authentication server 102 in more detail. Authentication processing to the authentication server 102 can be executed using Kerberos of the network application layer program 302.

In S600. the client MFP 100 transmits KEB_AS_REQ (Kerberos authentication service request) to the authentication server 102. In step S601, the authentication server 102 transmits KEB_AS_REP (Kerberos authentication service reply) to the MFP 101. KEB_AS_REP contains an encrypted log-on session key and client authentication data.

In step S602, the MFP 101 creates KEB_TRG_REQ (Kerberos ticket authentication service request) for requesting qualification information, on the basis of the received data, and transmits KEB_TRG_REQ to the authentication server 102. In step S603, the authentication server 102 sends back KEB_TRG_REP (Kerberos ticket authentication service reply). KEB_TRG_REP contains encrypted client authentication data.

In step S604, the MFP 101 creates KEB_AP_REQ (Kerberos application request) for requesting service use permission, on the basis of the received data, and transmits KEB_AP_REQ to the authentication server 102. In step S605, the authentication server 102 sends back KEB_AP_REP (Kerberos application reply). The MFP 101 determines "authentication OK" when the received data are normal and time data in the received data coincide with each other.

An example in which a single authentication server issues three requests has been described, but a plurality of authentication servers may be used depending on the network configuration. The authentication method may also be another one such as DH (Diffie-Hellman) authentication.

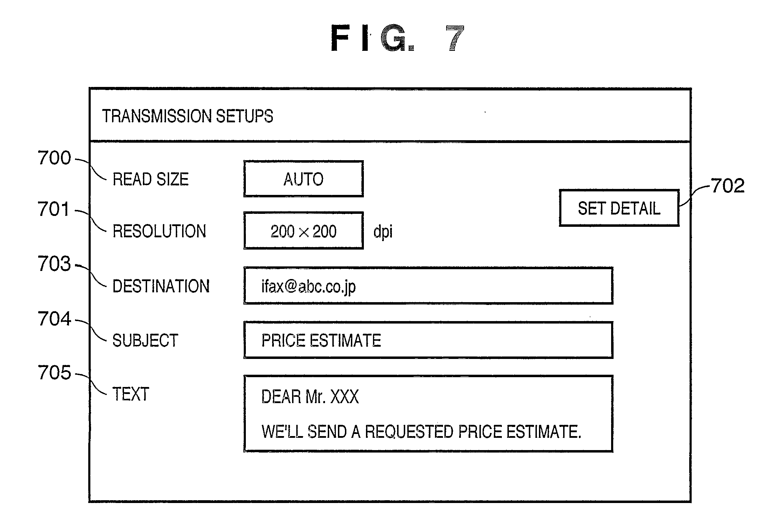

Fig. 7 is a view showing an example of a transmission setting window displayed in transmitting image data by email. A read size setting column 700 is used to designate an original size read by the scanner 234. By touching this column, a setting change window appears to allow designating the paper size such as A3, A4, A5, B4, B5, 11*17, LTR, or STMT and the orientation. The paper size and orientation can also be automatically selected. When "auto" is set, an original is read in accordance with an original size detected by the original sensor of the scanner 234.

A resolution column 701 is used to designate a read resolution in reading an image by the scanner 234. By touching this column, a setting change window appears to allow designating a value such as 200*100 dpi, 200*200 dpi, 200*400 dpi, 300*300 dpi, 400*400 dpi, or 600*600 dpi. At present, a default value "200*200" is set.

When a detail setting button 702 is clicked, detailed operation for scanning processing such as scanning density setting, original type designation, double-sided read, sequential page designation, and image quality adjustment can be designated.

A destination column 703 is used to designate an email destination, details of which will be described later. A subject column 704 is used to input a subject for email. A text column 705 is used to input a mail text (mail body). When these setting columns are touched, a software keyboard is displayed to enable inputting a character string.

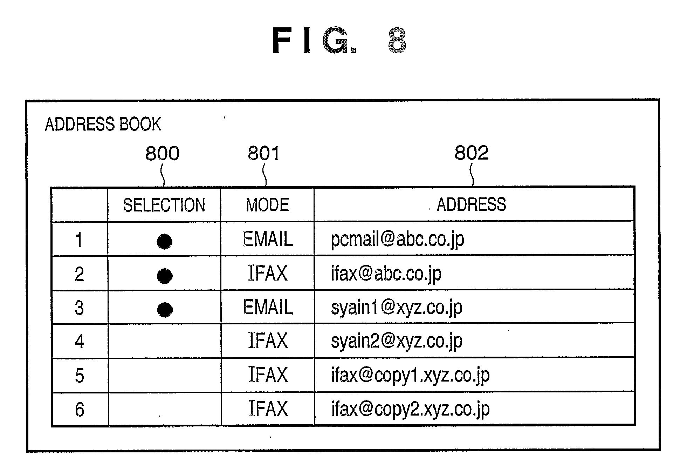

Fig. 8 is a view showing a destination setting window together with an example of an address book for managing destination information. The address book contains an email address 802, a transmission mode 801 used to transmit email containing image data, and a selection column 800 for selecting whether to transmit email.

The address book stored in the hard disk drive 237, which can be edited by invoking an address book editing window. On the editing window, an email address and transmission mode can be input in correspondence with each other. The address book may be stored for each MFP, or stored in any server and shared between a plurality of MFPs.

Any email address can be designated as a destination on the destination setting window of Fig. 8 by touching a selection column corresponding to the email address. Based on a detection signal from the operation unit 233, the CPU 230 changes information to one representing that the touched column has been selected. The CPU 230 describes the selected email address in the To: field of email. Upon the completion of transmission, all the selection columns are cleared.

Either of the E-mail transmission mode for transmission on the assumption that the destination is a general email address, and the IFAX transmission mode assuming transmission to an apparatus of the same type copying with the IFAX function can be designated as the transmission mode 801. In the E-mail transmission mode, either of the JPEG and PDF formats can be selected as an attached-file format. In the IFAX transmission mode, email can be transmitted in only the TIFF format. The E-mail transmission mode may be regarded as a mode for transmission to an apparatus of a different type which does not cope with the IFAX function, unlike the MFPs 100 and 101.

In the destination setting window of Fig. 8, pcmail@abc.co.jp and syain1@xyz.co.jp are set to the E-mail transmission mode. To the contrary, the IFAX transmission mode is designated for the ifax@abc.co.jp.

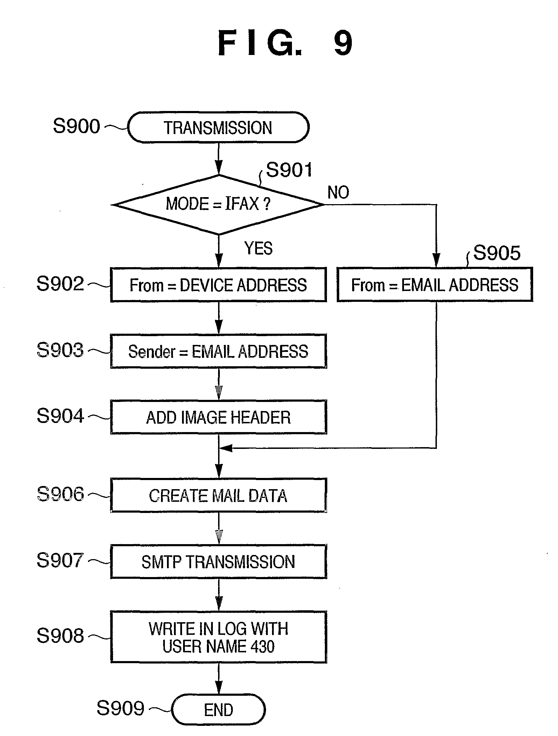

Fig. 9 is a flow chart showing an example of processing when image data is attached to email and transmitted.

In step S900, the CPU 230 detects that a transmission start button is operated in the operation unit 233.

In step S901, the CPU 230 refers to the address book stored in the hard disk drive 237, reads out the transmission mode of an email address selected as the transmission destination, and determines whether the read transmission mode is the IFAX transmission mode. If IFAX is set, the flow advances to step S902; if NO, to step S905.

In step S902, the CPU 230 reads out an email address assigned to the device from the ROM 231, and sets the email address in the From field of email.

In step S903, the CPU 230 reads out the email address of a user which has been acquired from the authentication server 102 in advance and stored in the RAM 232, and sets the read email address in the Sender field. For example, when the user logs in by syain1, syain1@xyz.co.jp which is an email address corresponding to syain1 is set in the Sender field. In this manner, setting of the From and Sender fields is completed.

In step S904, when addition of an image header is designated as an option, image header addition processing is executed. Image header addition processing is processing of embedding information for specifying a sender in an inconspicuous portion such as an upper portion of the image, similar to an existing FAX.

In step S905, when the E-mail transmission mode is designated, the CPU 230 reads out the email address of the user stored in the RAM 232, and sets the email address in the From field of the header portion of email data. Note that the Sender field may not be set, or the same address as that of the From field may be set.

In step S906, the CPU 230 adds MIME information, separates a mail body and attached file, encodes the attached file by using BASE 64, and creates email data. The binary data attachment method is not limited to this, and another data conversion method such as uuencode or BinHex may be used.

In step S907, the created email data is transmitted to the mail server 103 by using the SMTP protocol.

In step S908, the CPU 230 writes in a log file a user name 230 designated upon log-in, transmission destination information, the transmission date, the transmission time, the number of transmitted data, and the transmission results. The created log file allows easily grasping a person who has transmitted data. The log file may be output as a transmission result report for reporting a transmission result, or a transmission management report when the number of transmitted data exceeds the threshold. Alternatively, the log file may be displayed in response to operation from the operation unit 233.

In step S909, transmission operation ends after the end of write in the log file.

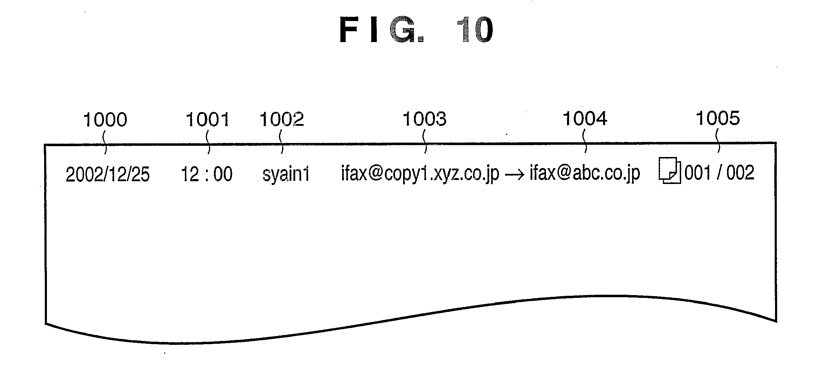

Fig. 10 is a view for explaining image header addition processing (S904) executed in transmission in the IFAX mode.

The image header can be formed by pieces of information such as a transmission date 1000, transmission time 1001, transmission user name 1002, sender email address 1003, transmission destination email address 1004, and page number 1005.

The transmission user name 1002 is identical to the name of a logged-in user (e.g., syain1). By referring to the image header, the recipient of this image can grasp a person in charge for image transmission.

The sender email address 1003 is identical to an email address described in the From field of email, and the email address of the device is set. By referring to the image header, the recipient of the image can easily grasp the email address of the transmission device. An original is scanned, and the scanned image is transmitted using the email address of the transmission device as a destination. A scanned image can be sent back while a conventional FAX operation system is substantially maintained.

The destination email address 1004 is an email address selected from the address book.

The CPU 230 acquires pieces of information on the transmission date 1000 and transmission time 1001 from an internal timer. The CPU 230 reads out the user name 1002 of the sender that is stored in the RAM 232, reads out the device email address 1003 stored in the ROM 231, and reads out the email address 1004 selected as a destination from the address book. The CPU 230 synthesizes these pieces of information as an image header on image data, and writes them in the log file in step S908. The information read order can be arbitrarily set.

Various aspects of the present invention will be explained on the basis of the above-described embodiment. The first aspect of the present invention provides an image communication apparatus (e.g., the MFP 101) which acquires image data, attaches it to email, and communicates the email, comprising an acquiring component (e.g., the CPU 230, scanner 234, formatter 239, facsimile unit 240, or network I/F 238) which acquires image data to be attached to the email, an email address setting component (e.g., the CPU 230) which sets as a source address (e.g., Sender field) the first email address capable of specifying a user who transmits the email when the email is to be transmitted to an apparatus (e.g., the PC 121 which incorporates general-purpose email software) of a type different from the image communication apparatus, and sets as source addresses (e.g., Sender field and From field) the first email address and the second email address associated with the image communication apparatus (e.g., an email address assigned to the device) when the email is to be transmitted to an apparatus (e.g., the Internet FAX 122 having the IFAX function) of the same type as the image communication apparatus, and a transmitting component (e.g., the CPU 230 and SMTP protocol) which transmits the email containing the acquired image data by using the set source address.

When email with attached image data is exchanged between a plurality of image communication apparatuses having the IFAX function, the email address of the user who is the sender is described in the Sender field, and then email is transmitted. The recipient can easily specify the sender.

The second aspect of the present invention provides an image communication apparatus which acquires image data, attaches it to email, and communicates the email, comprising a selecting component (e.g., the CPU 230 and S901) which selects one of the first mode (e.g., E-mail transmission mode) in which the email is transmitted to an apparatus of a type different from the image communication apparatus and the second mode (e.g., IFAX transmission mode) in which the email is transmitted to an apparatus of the same type as the image communication apparatus when transmitting the email upon attaching image data to the email, an email address setting component (e.g., the CPU 230, S902, and S903) which, when the second mode is selected, sets as source addresses the first email address capable of specifying a user who transmits the email and the second email address associated with the image communication apparatus, and a transmitting component (e.g., the CPU 230 and S907) which transmits, using the set source addresses, the email to which the acquired image data is attached.

When the image communication apparatus such as the MFP 101 has a plurality of transmission modes such as the E-mail transmission mode and IFAX transmission mode and the IFAX transmission mode is selected, the email address of the user who is the sender is described in the Sender field, and then email is transmitted. The recipient can easily specify the sender. In the IFAX transmission mode, devices of the same type communicate with each other and require an output similar to a conventional facsimile output. Thus, only email addresses assigned to the devices may be represented.

According to the third aspect of the present invention, when the selecting component selects the first mode (e.g., E-mail transmission mode), the email address setting component may set, as a source address (e.g., Sender field), the first email address capable of specifying a user who transmits the email.

That is, also when image data is transmitted from the MFP 101 having the IFAX function to a general email address, the email address of the user who is the sender is described in the Sender field, and then email is transmitted. The recipient can easily specify the sender. The email address of the device may also be described in the sender address. This allows the user who has received image data via a general email address to recognize that the image data has been transmitted from a device having the IFAX function, on the basis of the email address of the device.

The fourth aspect of the present invention provides an image communication apparatus which acquires image data, attaches it to email, and communicates the email, comprising an authenticating component (e.g., the CPU 230 and S501 to S504) which authenticates a user on the basis of authentication information on a user authorized to operate the image communication apparatus, in cooperation with an authentication server that manages an email address capable of specifying the user, an email address setting component (e.g., the CPU 230 and S902 or S905) which acquires from the authentication server an email address corresponding to the user authenticated by the authenticating component (e.g., S505) and sets the acquired email address in the From field or Sender field of the email, and a transmitting component (e.g., the CPU 230 and S907) which transmits, using the set source address, the email to which the acquired image data is attached.

In this way, only an authenticated user can transmit image data, and the email address of the authenticated user is automatically described in the Sender field. In addition to the above-described effects, the disguise of another person can be suppressed, improving the security.

The inventions according to the first to third aspects may further comprise a requesting component (e.g., the CPU 230, and S501 and S502) which requests input of authentication information when the user utilizes the image communication apparatus, and a receiving component (e.g., the CPU 230 and S505) which receives from the authentication server an email address corresponding to the input authentication information, and the email setting component may set the email address received from the authentication server as a source address.

The image communication apparatus according to any one of the aspects may further comprise an adding component (e.g., the CPU 230 and S904) which adds, to the image data, at least one of information capable of specifying the user and information capable of specifying the image communication apparatus, and the transmitting component may transmit the email together with attached image data which contains at least one of the information capable of specifying the user and the information capable of specifying the image communication apparatus.

By adding the user name and the email address of the device to image data itself, the same operability as that of a conventional FAX device can be realized. The sender can be specified, improving the security.

### [Second Embodiment]

Instead of an arrangement of setting the email address of the sender as a source address when the second mode is selected, the above-described image communication apparatus may comprise an adding component (e.g., the CPU 230 and S904) which adds to image data at least one of information (e.g., a user name 1002 or the email address of the user) capable of specifying the user who transmits the email and information (e.g., a device email address 1003) capable of specifying the image communication apparatus.

In this case, step S904 is omitted, but information capable of specifying a person in charge for transmission is added to the image header. The above-described objects can therefore be achieved.

Note that the user sets in advance which of the pieces of information is to be added.

### [Third Embodiment]

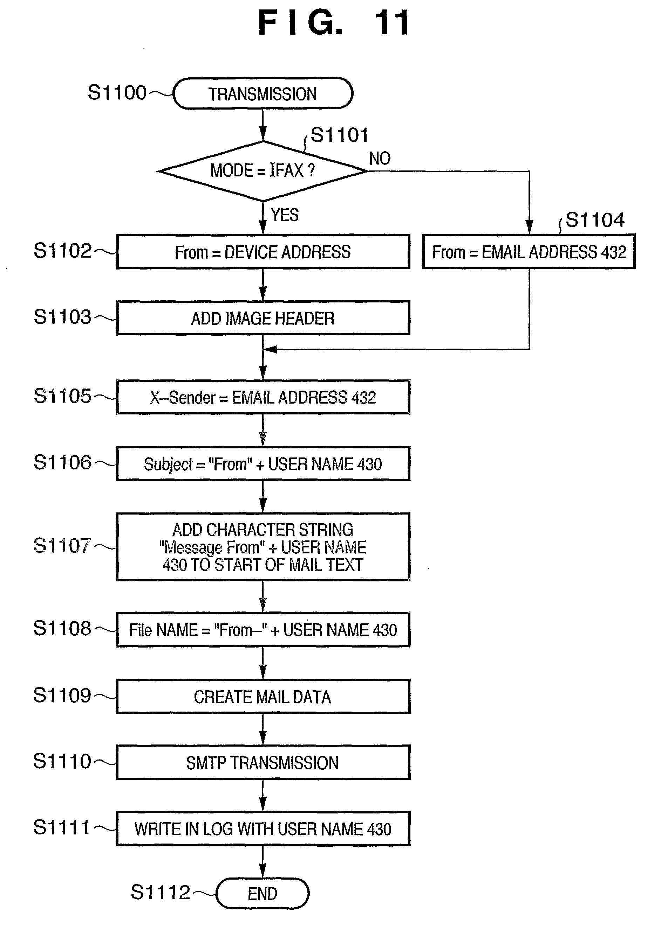

Fig. 11 is a flow chart showing an example of processing when image data is attached to email and transmitted according to the second embodiment. A case in which authentication is successful for a user name "syain2" in the user authentication flow shown in Fig. 5 and transmission setting shown in Fig. 7 is performed will be described.

In S1100, when a CPU 230 detects the press of a start key (not shown) in an operation unit 233, the CPU 230 starts transmission processing and reads a transmission original set in a scanner 234.

In S1101, the CPU 230 determines whether the IFAX destination is set as a transmission destination. If the transmission destination is the IFAX destination, the flow advances to step S1102; if the transmission destination is not the IFAX destination, to step S1104.

In step S1102, the CPU 230 sets an email address assigned to an IFAX device (MFP 100) in the From field of the email. For example, when an email address "ifax@copy1.xyz.co.jp" is set as the email address of the IFAX device, ifax@copy1.xyz.co.jp is set in the From field used for transmission to the IFAX destination.

In step S1103, the CPU 230 adds an image header (Fig. 10) to an image read by the scanner 234.

In step S1104, the CPU 230 sets an email address 432 of an authenticated user in the From field of email to be transmitted. For example, when the user with the user name "syain2" logs in, syain2@xyz.co.jp is set in the From field used for transmission to the IFAX destination.

In step S1105, the CPU 230 adds an extension field "X-Sender" representing the sender of the email to the mail header of the email, and sets as the value the email address of the logged-in user (email address 432 shown in Fig. 4). As is apparent from Fig. 4, when the user "syain2" logs in, syain2@xyz.co.jp is set in the X-Sender field.

In step S1106, the CPU 230 sets a character string "From" and a user name 430 of the logged-in user in the Subject of email. For example, when the user "syain2" logs in, a character string "From syain2" is set in Subject.

In step S1107, the CPU 230 adds a character string "Message From" and the user name 430 to the start line of the email text (body). For example, when the user "syain2" logs in, a character string "Message From syain2" is inserted in the start line of the mail text.

In step S1108, the CPU 230 arbitrarily combines and sets the character string "From-" and the user name 430 as a transmission file name to be attached to the email. For example, when the user "syain2" logs in, a character string "From-syain2.tif" is set as the transmission file name.

In step S1109, the CPU 230 creates target email data which reflects the above settings.

In step S1110, the CPU 230 transmits the created email data in accordance with the SMTP protocol.

In step S1111, the CPU 230 writes transmission management information such as various email settings described above in the log file. The transmission management information includes, e.g., the user name 430 "syain2", the transmission result, the transmission start time, the transmission time, the number of transmission pages, Subject information, the transmission file name, the transmission data size, the email address serving as a transmission destination, and information for discriminating IFAX/E-mail transmission. The log file is stored in a storage device such as a RAM 232.

When the operation unit 233 instructs the CPU 230 to output a communication management report, the CPU 230 reads out the log file, prints it out from a printer 235, and displays it on the operation unit 233.

The CPU 230 may create HTML data and transfer it to a WEB server in order to open data registered in the log file to the public in the WEB server in which an HTTPd program runs. In this case, a WEB browser installed in a client PC such as a PC 104 can display the communication management report. The HTTPd program may be executed by the CPU 230 or in an external server.

The third embodiment is effective in determining by whom, when, and to whom email has been transmitted.

The image header, X-Sender, Subject, the text, and the file name of an attached file are used to specify the sender in the above example, but may be arbitrarily selected and used. In this case, selected items are registered in advance in the RAM 232 of the device. Alternatively, items may be discriminatively registered for each user. In this case, settings are done when user authentication becomes successful.

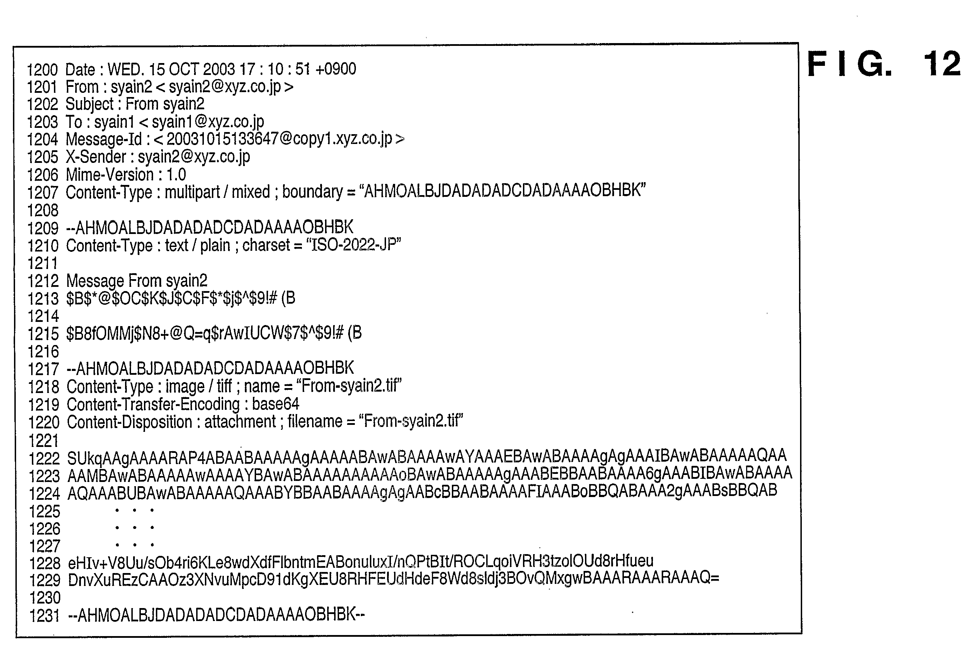

Fig. 12 is a view showing an example of email data according to the third embodiment. In this example, syain1@xyz.co.jp which is the email address of a user "syain1" is designated as an E-mail transmission destination.

Line numbers 1200 to 1207 in Fig. 12 form a mail header portion which is separated by a blank line 1208. The line 1200 is an email transmission Date field, and the email transmission day of the week, date, and time are set. The line 1201 is a From field representing email sender information, and is set in S1104. In this example, the user "syain2" logs in, and data syain2 <syain2@xyz.co.jp> is set. The line 1202 is a Subject field representing a mail subject, and is set in S1106. In this example, the user "syain2" logs in, and data <From syain2> is set. The line 1203 is a To field representing an email transmission destination. When syain1 is selected from the address book shown in Fig. 8, this To field is created. The line 1204 is Message-Id which is an ID unique to email. For example, the transmission time and the email address of the transmission device are set, and thus no mail having the same ID exists. The line 1205 is an X-Sender field set in S1105, and the email address of a logged-in user is set. In this example, the user "syain2" logs in, and data <syain2@xyz.co.jp> is set. The line 1206 provides MIME version information.

The line 1207 represents that mail data is separated into a plurality of blocks and the delimiter character string is "AHMOALBJDADADADCDADAAAAOBHBK". Lines 1209 to 1217 form one block of email. These lines can be determined as one block of email because "--" is added to the start of the delimiter character designated in the line 1206. The line 1210 represents that the separated part is a text and the JIS code is used as a character code. The line 1212 is the start line of the mail body added in S1107. When the user "syain2" logs in, a line "Message From syain2" is added.

Text data generated by character code conversion from a character string of an 8-bit code (e.g., SJIS code) input to a text column 705 in Fig. 7 into a 7-bit code (e.g., JIS code) is inserted into the lines 1213 to 1215.

Lines 1217 to 1231 form another block of the email. The line 1217 is the start of this block because "--" is added to the start of the delimiter character designated in the line 1206. The line 1231 is the final mail part because "--" is added to the end of the delimiter character.

The line 1218 represents that the block is formed by a TIFF image file. When the user "syain2" logs in, a file name "From-syain2.tiff" determined in step S1108 is set.

The line 1219 represents that the TIFF image file is decoded into a 7-bit character code by BASE 64. The line 1220 represents that a file having a file name "From-syain2.tif" is added as an attached file to mail.

The lines 1222 to 1229 are data obtained by encoding the TIFF image file by BASE 64. In BASE 64 encoding, 8-bit data of 3 bytes is encoded into 6-bit data of 4 bytes, and the data size after encoding is 4/3.

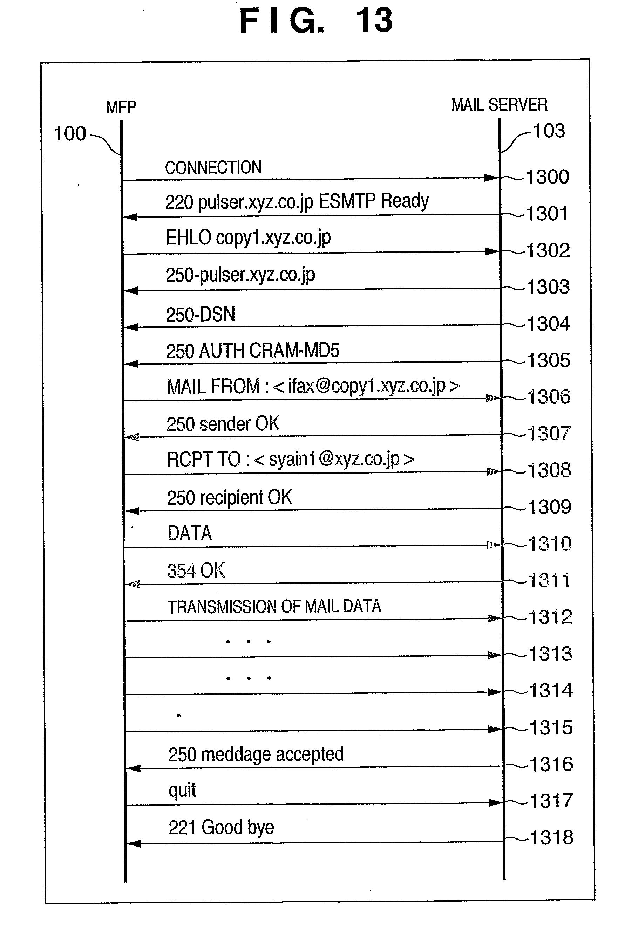

Fig. 13 is a view showing an example of an SMTP transmission sequence according to the third embodiment. The execution entity of the following sequence is the CPU of the MFP 100, a mail server 103, the PC 104, or the like. The CPU controls a communication circuit or the like in accordance with a program stored in the ROM, RAM, or hard disk drive, and executes processing in accordance with the following sequence. In processing such as data creation, reception, or transmission, the storage device such as the RAM is utilized as a work area.

The MFP 100 serving as an email client is connected to the mail server 103 (1300), and then the mail server 103 executes initialization processing of an SMTP session. After the end of initialization processing, the mail server 103 sends back a connection response message (1301) starting from a response code "220".

The MFP 100 transmits an EHLO command (1302), and then the mail server 103 notifies the MFP 100 by a response code "250" (1303) that the mail server 103 has received the command from the MFP 100. At this time, the mail server 103 may also send back an SMTP extension command held in the mail server 103.

A command 1304 represents that the mail server 103 supports a DSN (Delivery Status Notifications) service. A command 1305 represents that the mail server supports SMTP AUTH and the authentication algorithm corresponds to CRAM-MD5.

A command 1306 is a MAIL command representing the mail sender in the SMTP protocol. This command designates the email address of the mail sender.

When email delivery results in an error in delivering email using SMTP via a plurality of mail servers in a bucket bridge manner, error mail is transmitted to the target address. Transmission of error mail can be executed using RFC 821 developed by the IETF (Internet Engineering Task Force). For example, when an IFAX destination is set in the From field of email data, the mail address (ifax@copy1.xyz.co.jp) of a device (e.g., MFP 100) is set as the address of the mail command, and error mail is transmitted. When email data is to be transmitted to an E-mail destination, an email address obtained upon user authentication is set in the From field, and the mail address (ifax@copy1.xyz.co.jp) of the device (e.g., MFP 100) is always set as the address of the mail command. When an error occurs during SMTP delivery, error mail is always sent to the device. The device receives the error mail, and can print or display it.

The transmission device (e.g., MFP 100) receives error mail, and can easily determine which transmission job becomes an error, by referring to the log file managed in the device on the basis of the error mail.

By saving transmission data in the transmission device, the user can operate the transmission device and quickly resend the data when the transmission device receives error mail.

When the mail server 103 normally receives the mail command (1306), it sends back a response code (1307) starting from "250".

The MFP 100 transmits an RCPT TO command (1308) which designates the mail address of the email recipient. This command contains an address (syain1@xyz.co.jp) described in the TO field of email data. The mail server 103 receives this command, and after processing corresponding to the received command ends, sends back a response code (1309) starting from "250".

After the transmission destination is designated, the MFP 100 transmits to the mail server 103 a DATA command (1310) representing that email data is to be transmitted. When preparations for receiving email data are made, the mail server 103 sends back a response code (1311) starting from "354".

Upon reception of the transmission permission command (1311) from the mail server 103, the MFP 100 transmits email data (1312 to 1314) shown in Fig. 12. The MFP 100 transmits all data, and then transmits a character "." (1315) representing the end of data. When the mail server 103 has normally received the mail data, it sends back a response code (1316) starting from "250".

After the MFP 100 transmits the mail data, it transmits a quit command (1317). The mail server 103 sends back a response code (1318) starting from "221", ending a series of SMTP transmission processes.

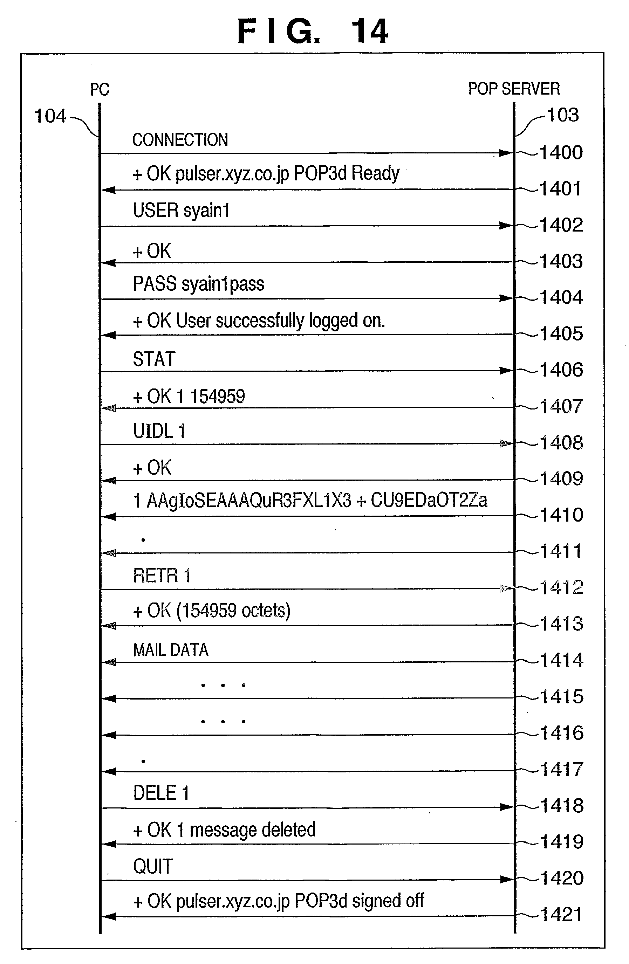

Fig. 14 is a view showing an example of an SMTP reception sequence according to the third embodiment. More specifically, Fig. 14 shows a sequence in which email data transmitted by SMTP is delivered to the mail server 103 serving as a POP server, and an email application installed in the PC 104 receives the email data in accordance with the POP3 protocol.

The PC 104 serving as a POP client is connected to the mail server 103 (1400), and then the POP server 103 executes initialization processing of a POP3 session. After the end of initialization processing, the POP server 103 sends back a connection response message (1401) starting from a response code "+OK". After this connection response, the POP server 103 shifts to the AUTHORIZATION state.

The PC 104 transmits a log-in user name (syain1) using a USER command (1402) in order to log in to the POP server 103. The POP server 103 sends back a reply code "+OK" (1403).

The PC 104 transmits the password (syain1pass) of the user "syain1" by using a PASS command (1404). The POP server 103 compares the registered password of the user "syain1" with the received password (syain1pass). When the two passwords coincide with each other, the POP server 103 sends back a connection response message (1405) starting from a response code "+OK". After this reply, the POP server 103 shifts from the AUTHORIZATION state to the TRANSACTION state, and the processible POP3 command changes.

The PC 104 inquires, of the POP server 103, the mail box state of the user "syain1" by using a STAT command (1406). The POP server 103 which has received the command checks a mail box "syain1", and checks the number of mail messages in the mail box and the mail spool size. The POP server 103 sends back a message (1407) formed by the number of mail messages (1) in the mail box "syain1" and the total mail spool size (154959), subsequent to the command "+OK".

The PC 104 recognizes from the message (1407) that one mail exists in the mail box. To acquire a number uniquely assigned to the mail, the PC 104 notifies the POP server 103 of a UIDL command (1408) and a mail box number "1".

The POP server 103 which has received the command sends back a response message "+OK" (1409). The POP server 103 checks an ID unique to the first mail, and sends back a message (1410) obtained by adding the unique ID after the mail number "1". The POP server 103 then sends back data "." (1411) representing the end of the list. It is guaranteed that the unique ID is unique to each mail, and no mail assigned with the same number exists.

Based on the acquired unique ID, the PC 104 examines whether the first mail has already been received. If no first mail has been received, the PC 104 designates the first mail by using an RETR command (1412), and requests the POP server 103 to transmit the first mail data in the mail box.

The POP server 103 sends back a message (1413) starting from "+OK", and transmits the first mail data (1414 to 1416) in the mail box. After the POP server 103 transmits all mail data, it sends back a response code "." (1417) representing the end of mail data.

After the PC 104 acquires the mail data, it instructs the POP server 103 to delete the first mail from the mail box "syain1" by using a DELE command (1418). The POP server 103 sets a delete flag for the first mail, and sends back a message (1419) starting from "+OK".

Since all processes have ended, the PC 104 transmits a QUIT command (1420) to the POP server 103. The POP server 103 deletes the first mail having the delete flag, and sends back a message (1421) starting from "+OK", ending all POP3 reception processes.

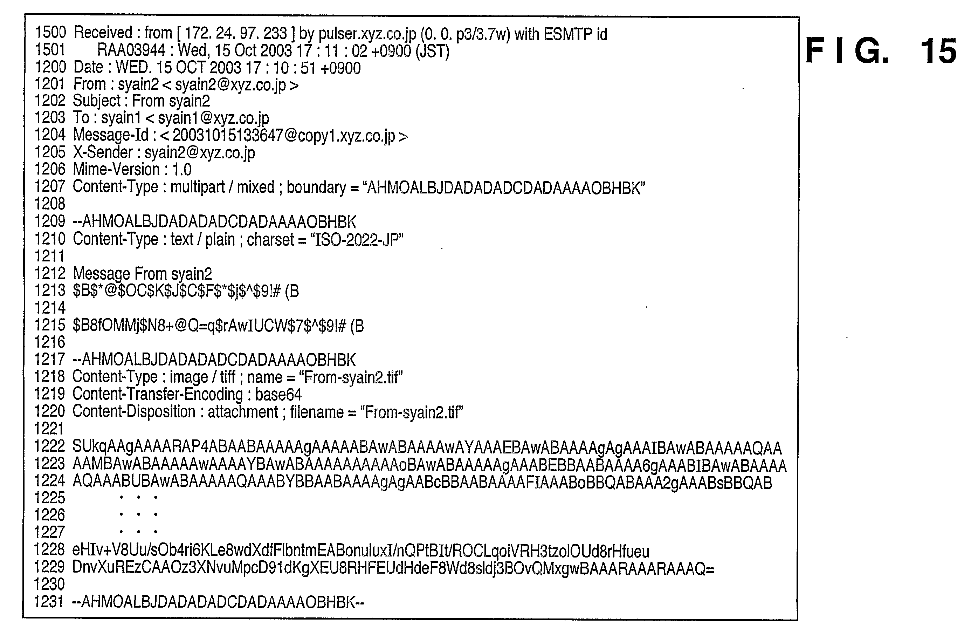

Fig. 15 is a view showing an example of mail data (1414 to 1416 in Fig. 14) according to the third embodiment. The same reference numerals as in Fig. 12 denote the same parts, and a description thereof will be omitted. Data 1500, 1501, and 1502 are added to email data shown in Fig. 12 when the email data transmitted from the MFP 100 passes through the intermediate mail server 103. The data 1500 and 1501 are Received headers. These data 1500 and 1501 are formed by route information such as a HOST name set in the mail server 103 upon reception of mail data by the mail server 103, and time stamp data such as the reception day of the week, date, and time.

The transmission destination is the mail box "syain1" in the mail server 103, and the mail server 103 is the final SMTP destination. Thus, the mail server 103 adds data (1502) of the Return-Path header to email data. Addition of the Return-Path header is made mandatory in RFC 2821 developed by the IETF.

An email address received in addition to the mail command (1306) of the SMTP protocol described with reference to Fig. 13 is directly substituted into data of the Return-Path header 1502. The email address is originally described in the FROM field as a kind of mail "from" information.

If the PC 104 detects an error (e.g., data is image data which cannot be processed by a reception apparatus) upon reception of the mail data by, e.g., the POP3 protocol other than the SMTP protocol, the PC 104 sends an error generation notification to the mail address described in the Return-Path header (in the above example, the address of a transmission apparatus). As for whether the data is image data not processible by the reception apparatus, for example, the CPU of the PC 104 creates a list or table of the extensions (.tif, .jpg, and the like) of processible image data, and stores the list or table in the storage device. The CPU searches the list or the like for the extension of received image data, and if the extension is found, can determine that the image data can be processed; otherwise, can determine that the image data cannot be processed.

In this manner, when an error occurs, the error is transmitted to the mail address (ifax@copy1.xzy.co.jp) of the MFP 100 serving as a transmission device. The MFP 100 can receive the error mail, and print it from the printer 235 or display it using the operation unit 233.

Since the transmission/reception log file is created, the MFP 100 can print from the printer 235 or display on the operation unit 233 which transmission job becomes an error, by referring to the log file on the basis of the received error mail.

### <Other Embodiments>

Note that the present invention can be applied to an apparatus comprising a single device or to system constituted by a plurality of devices. For example, the above-described MFP may be implemented by a program for realizing a printer, scanner, PC, and Internet work facsimile. In the above-described embodiments, the authentication server 102 is installed in the network, and pluralities of PCs and MFPs perform authentication. The same effects can also be obtained by installing an authentication server function in the MFP. In this fashion, a plurality of devices may be integrated into a single device.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code itself installed in the computer also implements the present invention. In other words, the claims of the present invention also cover a computer program for the purpose of implementing the functions of the present invention.

In this case, so long as the system or apparatus has the functions of the program, the program may be executed in any form, e.g., as object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

Further, it is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Furthermore, besides the case where the aforesaid functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the spirit and scope thereof, it is to be understood that the invention is not limited to the specific embodiments thereof except as defined in the appended claims.

This application is a divisional application of European patent application no. 04715517 (the "parent application"), also published under no. EP-A-1614280. The original claims of the parent application are repeated below in the present specification and form part of the content of this divisional application as filed.
1. An image communication apparatus which acquires image data, attaches the image data to email, and communicates the email, comprising: an acquiring component which acquires image data to be attached to the email; an email address setting component which sets as a source address a first email address capable of specifying a user who transmits the email when the email is to be transmitted to an apparatus of a type different from said image communication apparatus, and sets as the source address a second email address associated with said image communication apparatus when the email is to be transmitted to an apparatus of the same type as said image communication apparatus; and a transmitting component which transmits the email containing the acquired image data by using the set source address.
2. The apparatus according to claim 1, wherein said email address setting component sets the first email address in a sender field and the second email address in a From field when the email is transmitted to the apparatus of the same type as said image communication apparatus.
3. The apparatus according to claim 1, further comprising a component which adds to the image data at least one of information capable of specifying the user and information capable of specifying said image communication apparatus, wherein said transmitting component transmits the email by attaching, to the email, image data which contains at least one of the information capable of specifying the user and the information capable of specifying said image communication apparatus.
4. The apparatus according to claim 1, further comprising: a component which requests input of authentication information when the user uses said image communication apparatus ; and a component which receives an email address corresponding to the input authentication information from an authentication server, wherein said email setting component sets the email address received from the authentication server as a source address.
5. The apparatus according to claim 4, further comprising a function of the authentication server.
6. The apparatus according to claim 1, further comprising a component which creates log data containing at least information on the user when the email is transmitted.
7. An image communication apparatus which acquires image data, attaches the image data to email, and communicates the email, comprising:
   a selecting component which selects one of a first mode in which the email is transmitted to an apparatus of a type different from said image communication apparatus, and a second mode in which the email is transmitted to an apparatus of the same type as said image communication apparatus when transmitting the email upon attaching the image data to the email; an email address setting component which, when the second mode is selected, sets as source addresses a first email address capable of specifying a user who transmits the email and a second email address associated with said image communication apparatus ; and a transmitting component which transmits, using the set source addresses, the email to which the image data is attached.
8. The apparatus according to claim 7, wherein said email address setting component sets the first email address in a sender field and the second email address in a From field when the email is transmitted to the apparatus of the same type as said image communication apparatus.
9. The apparatus according to claim 8, wherein the first mode includes a mode for transmission to a general email address, and the second mode includes a mode for communication between Internet facsimile devices.
10. The apparatus according to claim 7, further comprising a component which adds to the image data at least one of information capable of specifying the user and information capable of specifying said image communication apparatus, wherein said transmitting component transmits the email by attaching, to the email, image data which contains at least one of the information capable of specifying the user and the information capable of specifying said image communication apparatus.
11. The apparatus according to claim 7, further comprising: a component which requests input of authentication information when the user uses said image communication apparatus ; and a component which receives an email address corresponding to the input authentication information from an authentication server, wherein said email setting component sets the email address received from the authentication server as a source address.
12. The apparatus according to claim 11, further comprising a function of the authentication server.
13. The apparatus according to claim 7, further comprising a component which creates log data containing at least information on the user when the email is transmitted.
14. An image communication apparatus which acquires image data, attaches the image data to email, and communicates the email, comprising: a selecting component which selects one of a first mode in which the email is transmitted to an apparatus of a type different from said image communication apparatus, and a second mode in which the email is transmitted to an apparatus of the same type as said image communication apparatus when transmitting the email upon attaching the image data to the email; an email address setting component which, when the first mode is selected, sets as a source address a first email address capable of specifying a user who transmits the email ; and a transmitting component which transmits, using the set source address, the email to which the image data is attached.
15. The apparatus according to claim 14, wherein the first mode includes a mode for transmission to a general email address, and the second mode includes a mode for communication between Internet facsimile devices.
16. The apparatus according to claim 14, further comprising a component which adds to the image data at least one of information capable of specifying the user and information capable of specifying said image communication apparatus, wherein said transmitting component transmits the email by attaching, to the email, image data which contains at least one of the information capable of specifying the user and the information capable of specifying said image communication apparatus.
17. The apparatus according to claim 14, further comprising: a component which inputs authentication information when the user uses said image communication apparatus; and a component which receives an email address corresponding to the input authentication information from an authentication server, wherein said email setting component sets the email address received from the authentication server as a source address.
18. The apparatus according to claim 17, further comprising a function of the authentication server.
19. The apparatus according to claim 14, further comprising a component which creates log data containing at least information on the user when the email is transmitted.
20. An image communication apparatus which acquires image data, attaches the image data to email, and communicates the email, comprising: a component which selects one of a first mode in which the email is transmitted to an apparatus of a type different from said image communication apparatus, and a second mode in which the email is transmitted to an apparatus of the same type as said image communication apparatus when transmitting the email upon attaching the image data to the email; a component which, when the second mode is selected, adds to the image data at least one of information capable of specifying a user who transmits the email and information capable of specifying said image communication apparatus; and a component which transmits the email by attaching the image data.
21. The apparatus according to claim 20, further comprising a creating component which creates log data containing at least information on the user when the email is transmitted.
22. An image communication method of acquiring image data, attaching the image data to email, and communicating the email, comprising the steps of: acquiring image data to be attached to the email; setting as a source address a first email address capable of specifying a user who transmits the email when the email is to be transmitted to an apparatus of a type different from an image communication apparatus that executes the image communication method, and setting as source addresses the first email address and a second email address associated with the image communication apparatus when the email is to be transmitted to an apparatus of the same type as the image communication apparatus; and transmitting the email containing the acquired image data by using the set source address.
23. An image communication method of acquiring image data, attaching the image data to email, and communicating the email, comprising the steps of: selecting one of a first mode in which the email is transmitted to an apparatus of a type different from an image communication apparatus that executes the image communication method, and a second mode in which the email is transmitted to an apparatus of the same type as the image communication apparatus ; when the second mode is selected, setting as source addresses a first email address capable of specifying a user who transmits the email and a second email address associated with the image communication method; and transmitting, using the set source addresses, the email to which the acquired image data is attached.
24. An image communication method of acquiring image data, attaching the image data to email, and communicating the email, comprising the steps of: selecting one of a first mode in which the email is transmitted to an apparatus of a type different from an image communication apparatus that executes the image communication method, and a second mode in which the email is transmitted to an apparatus of the same type as the image communication apparatus; when the first mode is selected, setting as a source address a first email address capable of specifying a user who transmits the email; and transmitting, using the set source address, the email to which the image data is attached.
25. An image communication apparatus which acquires image data, attaches the image data to email, and communicates the email, comprising: an authentication component which authenticates a user on the basis of authentication information on a user authorized to operate said image communication apparatus, in cooperation with an authentication server that manages an email address capable of specifying the user; an email address setting component which acquires from the authentication server an email address corresponding to the user authenticated by said authenticating component and sets the acquired email address in a From field or a sender field of the email to be transmitted together with attached image data; and a transmitting component which transmits, using the set source address, the email to which the image data is attached.
26. The apparatus according to claim 25, wherein said email address setting component sets the email address corresponding to the user in the sender field and an email address corresponding to said image communication apparatus in the From field when the email is transmitted to the apparatus of the same type as said image communication apparatus.
27. An image communication method of acquiring image data, attaching the image data to email, and communicating the email, comprising the steps of: authenticating a user on the basis of authentication information on a user authorized to communicate an image, in cooperation with an authentication server which manages an email address capable of specifying the user; acquiring from the authentication server an email address corresponding to the authenticated user ; setting the acquired email address in a From field or a sender field of the email to be transmitted together with attached image data; and transmitting, using the set source address, the email to which the image data is attached.
28. An image communication apparatus which attaches image data to email and communicates the email, comprising: an authentication component which authenticates a user in cooperation with an authentication server that manages authentication information on the user authorized to operate said image communication apparatus; an acquiring component which acquires the image data and creates email data when the user is successfully authenticated; an email address setting component which sets in the email data the authentication information on the user authenticated by the authenticating component; a transmitting component which transmits the email data ; and a recording component which records, in a log file, the user authentication information and transmission management information represented by the number of transmission images as a result of transmitting the email data.
29. The apparatus according to claim 28, wherein said setting component sets the user authentication information in at least one of a subject field of the email data, a mail text, a name of an attached file, and an extension field of a mail header.
30. An image communication method of attaching image data to email and communicating the email, comprising the steps of: authenticating a user in cooperation with an authentication server which manages authentication information on the user authorized to perform image communication;
   acquiring the image data to create email data when the user is successfully authenticated; setting in the email data the authentication information on the authenticated user;
   transmitting the email data; and registering, in a log file, the user authentication information and transmission management information represented by the number of transmission images as a result of transmitting the email data.
31. An image communication apparatus which attaches image data to email and communicates the email, comprising : a component which authenticates a user in cooperation with an authentication server that manages an email address of the user authorized to operate said image communication apparatus ; a component which acquires the email address of the authenticated user from the authentication server and sets the acquired email address in a sender field; and a component which, when email to which the image data is attached is to be transmitted in accordance with a mail delivery protocol, transmits the email by setting in a From field of the email the email address set in said image communication apparatus.
32. An image communication method of attaching image data to email and communicating the email, comprising the steps of: authenticating a user in cooperation with an authentication server which manages an email address of the user authorized to communicate an image; acquiring the email address of the authenticated user from the authentication server to set the acquired email address in a sender field; and when email to which the image data is attached is to be transmitted in accordance with a mail delivery protocol, transmitting email by setting in a From field of the email the email address set in the image communication apparatus.
33. An image communication system including an image transmission device which attaches image data to email and transmits the email, a mail server apparatus which transfers the email, and an image reception device which receives the email, wherein the image transmission device comprises: a component which authenticates a user in cooperation with an authentication server that manages an email address of the user authorized to operate the image transmission device; a component which acquires the email address of the authenticated user from the authentication server and sets the acquired email address in a sender field; and a transmitting component which, when email to which the image data is attached is to be transmitted in accordance with a mail delivery protocol, transmits the email by setting in a From field of the email the email address set in the image transmission device, the mail server apparatus comprises: a component which receives the email by using the mail delivery protocol; and a component which writes the email address set in the From field of the email, as a reply address in the received email when a mail box of a recipient of the email belongs to the mail server apparatus, and the image reception device comprises: a component which receives the email stored in the mail server apparatus by using a communication protocol different from the mail delivery protocol; a component which determines whether the email is processible data ; and an error notifying component which notifies, of an error, the reply address written by the mail server apparatus when the email is not processible data.
34. An image communication method executed in an image transmission device which attaches image data to email and transmits the email, a mail server apparatus which transfers the email, and an image reception device which receives the email, comprising the steps of: causing the image transmission device to authenticate a user in cooperation with an authentication server which manages an email address of the user authorized to operate the image transmission device; causing the image transmission device to acquire the email address of the authenticated user from the authentication server and set the acquired email address in a sender field; causing the image transmission device to, when email to which the image data is attached is to be transmitted in accordance with a mail delivery protocol, transmit the email by setting in a From field of the email the email address set in the image transmission device ; causing the mail server apparatus to receive the email by using the mail delivery protocol ; causing the mail server apparatus to write the email address set in the From field of the email, as a reply address in the received email when a mail box of an email recipient of the email belongs to the mail server apparatus; causing the image reception device to receive the email stored in the mail server apparatus by using a communication protocol different from the mail delivery protocol; causing the image reception device to determine whether the email is processible data; and
   causing the image reception device to notify, of an error, the reply address written by the mail server apparatus when the email is not processible data.
35. An image communication apparatus which attaches image data to email and communicates the email, comprising: a storing component which stores an email address of said image communication apparatus; a first setting component which sets a sender of the email ; a second setting component which sets an email address of the set sender at a header portion of the email, the email address of the sender being different from the email address of said image communication apparatus; and a third setting component which sets the stored mail address of said image communication apparatus in a mail command used for communication with a mail server in transmitting the email in which the email address of the sender is set at the header portion.
36. The apparatus according to claim 35, further comprising a selecting component, arranged to select an Internet facsimile mode or an email mode, said second setting component sets the email address of said image communication apparatus to the header portion of the email in a case where said selecting component selects the Internet facsimile mode, and said second setting component sets the email address of the sender to the header portion of the email in a case where said selecting component selects the email mode.
37. A method of controlling an image communication apparatus which attaches image data to email and communicates the email, comprising the steps of: setting a sender of the email; setting an email address of the set sender at a header portion of the email; setting the mail address of said image communication apparatus in a mail command used for communication with a mail server ; and transmitting to the mail server the email in which the email address of the sender is set at the header portion.

## Claims

1. An image communication apparatus comprising:
a storing component (231) which stores an email address of said image communication apparatus; and
a first setting component (230) which sets a sender of the email,
**characterized in that** said image communication apparatus further comprises:
a second setting component (230) which sets an email address of the set sender at a field in a header portion of the email, the email address of the sender being different from the email address of said image communication apparatus stored by said storing component; and
a third setting component (230) which sets the stored email address of said image communication apparatus in a mail command used for communication with a mail server in transmitting the email in which the email address of the sender is set at the field in the header portion.

2. The apparatus according to claim 1, further comprising a selecting component (230), arranged to select an Internet facsimile mode or an email mode, said second setting component sets the email address of said image communication apparatus to the field in the header portion of the email in a case where said selecting component selects the Internet facsimile mode, and said second setting component sets the email address of the sender to the field in the header portion of the email in a case where said selecting component selects the email mode.

3. The apparatus according to claim 1 or 2, wherein the field is a From field in the header portion (S905).

4. The apparatus according to claim 1, wherein the field is a Sender field in the header portion (S903).

5. A method of controlling an image communication apparatus which attaches image data to email and communicates the email, comprising the steps of:
setting a sender of the email;
**characterized in that** said method further comprises:
setting an email address of the set sender at a field in a header portion of the email (S903, S905, S1104),
setting an email address of said image communication apparatus in a mail command used for communication with a mail server (S907, S1110), the email address of the image communication apparatus being different from the email address of the sender; and
transmitting to the mail server the email in which the email address of the sender is set at the field in the header portion (S907, S1110).
